# EUROPEAN PATENT APPLICATION

(11) **EP 4 847 474 A1**
(43) Date of publication of application: **02.12.2026**
(21) Application number: 26181432.1
(22) Date of filing: 27.05.2026
(51) Int. Cl.: C04B 35/628, C04B 35/80, F01D 5/28

(54) **OXIDATION RESISTANT COATING**

(30) Priority: 29.05.2025 US 202519223021
(71) Applicant: RTX Corporation, Farmington, CT 06032 (US)
(72) Inventor: NABLE, Jun, Hamden (US); CALLAWAY, Evan B, Goleta (US)
(74) Representative: Dehns

(57) **Abstract**

A coated substrate (200), comprising a substrate (210) comprising a ceramic material; an interfacial coating multilayer (220) disposed on the substrate (210), the interfacial coating multilayer comprising at least one set of alternating layers comprising at least one of the following layers: a first debonding layer (200a) disposed adjacent the substrate; and a first oxidation resistant layer (200b) disposed adjacent the first debonding layer and opposite the substrate.

## Description

### FIELD OF THE INVENTION

The invention disclosed herein relates to coatings and, in particular, to oxidation resistant coatings.

### BACKGROUND OF THE INVENTION

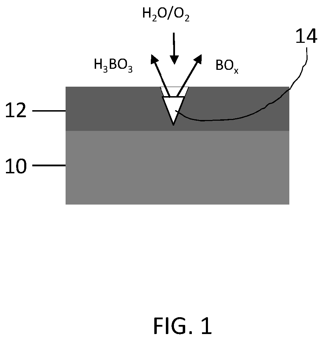

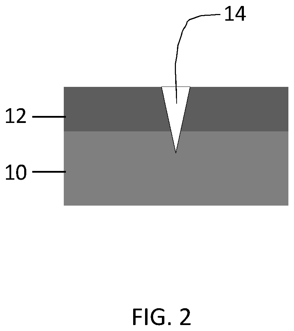

Referring to FIG. 1, interface coatings (IFC) 12 can provide critical functions in ceramic matrix composites (CMCs) containing bundled reinforcing fibers 10 within a matrix (not shown). When operating in an oxidizing environment at elevated temperatures, e.g., at least 425°C, the IFC 12 can provide oxidation protection for the reinforcing fibers 10. In addition to providing oxidation protection, the IFC 12 can also serve as the crack deflecting fuse that further protects the CMC. If a crack 14 is present in the CMC in such an operating environment, the IFC also can be exposed to the oxidizing environment (see FIG. 1). IFC materials can include crystalline hexagonal BN (h-BN) or pyrocarbon (PyC). However, these IFC materials can be susceptible to oxidation, especially when air and/or moisture are present. For example, h-BN IFC can demonstrate improved oxidation resistance compared to PyC IFC. However, h-BN IFC can still suffer from stability problems when exposed to water vapor (H₂O) and air (O₂) at elevated temperatures. For instance, when exposed to H₂O and O₂, the h-BN IFC may react with both and produce H₃BO₃ and BOₓ. As those reaction products volatize, the h-BN IFC can degrade and begin cracking (see FIG. 1). More particularly, as BOₓ continues volatizing, the crack(s) being formed can continue propagating and potentially form through the h-BN IFC to degrade the underlying reinforcing fibers (see FIG. 2).

Consequently, there is a need to improve the durability of interfacial coating systems.

### SUMMARY OF THE INVENTION

In a first aspect of the invention, a coated substrate is provided, the coated substrate comprising: a substrate comprising a ceramic material; an interfacial coating multilayer disposed on the substrate, the interfacial coating multilayer comprising at least one set of alternating layers comprising at least one each of the following layers: a first debonding layer disposed adjacent the substrate; and a first oxidation resistant layer disposed adjacent the first debonding layer and opposite the substrate.

In any of the aspects or embodiments described above or herein, the coated substrate further comprises a second debonding layer disposed adjacent the first oxidation resistant layer and opposite the first debonding layer; and a second oxidation resistant layer disposed adjacent the second debonding layer and opposite the first oxidation resistant layer.

In any of the aspects or embodiments described above or herein, the first and second debonding layers may comprise (or be) boron nitride.

In any of the aspects or embodiments described above or herein, the first and second oxidation resistant layers may comprise (or be) aluminum nitride.

In any of the aspects or embodiments described above or herein, the ceramic material may comprise any one or more of the following: a ceramic fiber, a ceramic tow, a ceramic preform, and combinations thereof.

In any of the aspects or embodiments described above or herein, the interfacial coating multilayer may comprise (or have) a thickness of approximately 50 nm to approximately 2,000 nm.

In any of the aspects or embodiments described above or herein, the first debonding layer may comprise (or have) a thickness of approximately 10 nm to approximately 160 nm.

In any of the aspects or embodiments described above or herein, the first oxidation resistant layer may comprises (or have) a thickness of approximately 25 nm to approximately 400 nm.

In any of the aspects or embodiments described above or herein, the first debonding layer and the first oxidation resistant layer may comprise (or have) a thickness ratio of approximately 1.5:1 to approximately 3:1.

In any of the aspects or embodiments described above or herein, the interfacial coating multilayer may comprise (or have) a formula of (BN-AlN)_{X}, wherein x > 2. The interfacial coating multilayer may comprise (or have) at least two sets of the alternating layers (e.g., alternating layers of BN and AlN).

In another aspect of the invention a method of fabricating an interfacial coating multilayer is provided, the method comprising the steps of: loading a substrate into an apparatus; depositing a precursor debonding material onto the substrate to form a first debonding layer; depositing a precursor oxidation resistant material onto the first debonding layer to form a first oxidation resistant layer; and repeating the deposition steps until forming an interfacial coating multilayer comprising at least one set of alternating layers comprising at least one of the following layers: the first (or a second) debonding layer disposed adjacent the substrate; and the first (or a second) oxidation resistant layer disposed adjacent the first (or second) debonding layer and opposite the substrate.

In any of the aspects or embodiments described above or herein, depositing may comprise any one or more of the following techniques: chemical vapor deposition, chemical vapor infiltration, and combinations thereof.

In any of the aspects or embodiments described above or herein, depositing may comprises depositing at a temperature range of approximately 600°C to approximately 1,400°C.

In any of the aspects or embodiments described above or herein, depositing the precursor debonding material may comprise depositing at a temperature range of approximately 1,200°C to approximately 1,400°C.

In any of the aspects or embodiments described above or herein, depositing the precursor oxidation resistant material may comprise depositing at a temperature range of approximately 700°C to approximately 1,000°C.

In any of the aspects or embodiments described above or herein, the precursor debonding material and the precursor oxidation resistant material may comprise (or, e.g., respectively, be) any one or more of the following: boron halides, ammonia, aluminum trichloride, and combinations thereof.

In any of the aspects or embodiments described above or herein, the first debonding layer may comprise (or be) boron nitride.

In any of the aspects or embodiments described above or herein, the first oxidation resistant layer may comprise (or be) aluminum nitride.

In any of the aspects or embodiments described above or herein, the substrate may comprise at least one of the following ceramic materials: a ceramic fiber, a ceramic tow, a ceramic preform, and combinations thereof.

In any of the aspects or embodiments described above or herein, the method may further comprise heating the substrate prior to the deposition steps.

In yet another aspect of the invention a method for sealing a crack is provided, the method comprising the steps of: exposing at least one gas turbine engine component to any one or more of the following: water vapor, moisture, air, elevated temperature, and combinations thereof; forming at least one crack in a matrix within a ceramic matrix composite of the at least one gas turbine engine component, the at least one crack propagating into an interfacial coating multilayer deposited on a substrate of the ceramic matrix composite and debonding within at least one debonding layer of the interfacial coating multilayer; producing a reaction product caused by a reaction between the interfacial coating multilayer having the at least one crack with any one or more of the following: water vapor, moisture, air, elevated temperature, and combinations thereof; and sealing the at least one crack with the reaction product, wherein the interfacial coating multilayer comprises at least one set of alternating layers comprising at least one of the following layers: at least one debonding layer disposed adjacent the ceramic matrix composite; at least one oxidation resistant layer disposed adjacent the at least one debonding layer and opposite the ceramic matrix composite; and optionally at least one additional debonding layer followed by at least one additional oxidation resistant layer disposed on the at least one oxidation resistant layer.

In any of the aspects or embodiments described above or herein, the first debonding layer may comprise (or be) boron nitride. The first oxidation resistant layer may comprises (or be) aluminum nitride.

In any of the aspects or embodiments described above or herein, the reaction product may comprise (or be) aluminum borate glass.

In any of the aspects or embodiments described above or herein, the reaction product may comprise (or be) Al₁₈B₄O₃₃.

In any of the aspects or embodiments described above or herein, producing the reaction product may comprise (or consists of) a reaction of BN and AlN in the presence of H₂O and O₂ to produce an aluminum borate glass.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the following exemplary embodiment(s) which follows, taken in conjunction with the accompanying drawings in which:
FIG. 1, not drawn to scale, illustrates a ceramic-containing material whose interfacial coating is degrading and cracking during exposure to water vapor, air and elevated temperatures.
FIG. 2, not drawn to scale, illustrates the ceramic-containing material of FIG. 1 further impacted by prolonged exposure of the crack to water vapor, air and elevated temperatures.
FIG. 3 is a flowchart illustrating an exemplary method of fabricating a ceramic-containing material containing an exemplary multilayer oxidation resistant structure.
FIG. 4, not drawn to scale, illustrates an exemplary ceramic-containing material containing an exemplary multilayer oxidation resistant structure.
FIG. 5, not drawn to scale, illustrates another exemplary ceramic-containing material containing another exemplary multilayer oxidation resistant structure.
FIG. 6, not drawn to scale, schematically illustrates a gas turbine engine containing gas turbine engine components that can include the exemplary ceramic-containing material and interfacial coating multilayer(s) disclosed herein.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to an exemplary oxidation resistant interfacial coating multilayer (IFC multilayer) for use with ceramic matrix composite materials. The exemplary oxidation resistant interfacial coating multilayer disclosed herein may comprise alternating layers of differing nitride-containing materials. When exposed to operating environments containing water vapor and/or air at elevated temperatures, the nitride-containing materials can form a self-healing glass. The self-healing glass can plug cracks and prevent further ingress of oxidants through the coating structure.

As disclosed herein, the term "ceramic-containing material" may be defined as a substrate containing fiber(s), tow(s), preform(s); individually and combinations thereof. Suitable ceramic fibers for use as the fibers and/or fiber tows may include, but are not limited to, silicon carbide, carbon, aluminum oxide, silicon nitride, combinations thereof, and the like. At least one fiber, at least one fiber tow, or at least one fiber and fiber tow may be combined to fabricate the ceramic fiber preform using any suitable technique known.

As used herein, a "coated preform" or "coated substrate" refers to an interface coated ceramic fiber preform or an interface coated ceramic fiber substrate. As also used herein, a "partially densified CMC" or "partially densified ceramic matrix composite" refers to a coated substrate or preform that includes a structural support material layer that facilitates rigidization of the preform to become self-supporting, also known as a rigidized coated substrate or rigidized coated preform. As also used further herein, a "ceramic matrix composite" or "CMC" refers to a matrix infiltrated into the coated substrate or coated preform or alternatively, a matrix infiltrated into the rigidized partially densified CMC.

As used herein, a "debonding layer" may also be known as a "crack deflection layer". Likewise, a "crack deflection layer" also may be known as a "debonding layer".

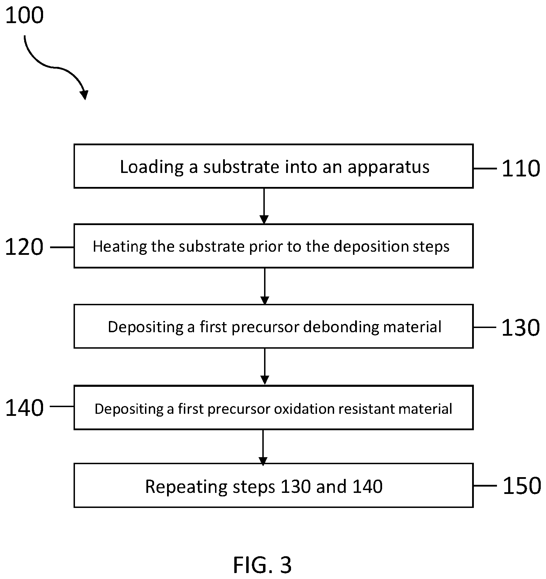

Referring now to FIG. 3, a flowchart 100 illustrating a process for fabricating an exemplary IFC multilayer is shown. At a step 110 of FIG. 3, a substrate comprising a ceramic-containing material may be loaded into an apparatus. Suitable apparatus may include, but are not limited to, any apparatus capable of depositing a material onto a ceramic-containing material. In particular, the apparatus may be a chemical vapor infiltration (CVI) reactor, a chemical vapor deposition (CVD) reactor, and combinations thereof. For example, a suitable CVD reactor may facilitate a process such as, but not limited to, metal organic chemical vapor deposition. For exemplary purposes, an exemplary CVD process will be discussed further. Next, at a step 120 of FIG. 3, in preparation for the deposition steps that follow, the substrate may be heated. Now, the exemplary IFC multilayer may begin being deposited and fabricated. At a step 130 of FIG. 3, a precursor debonding material may be deposited onto the substrate to form a first debonding layer. Any suitable precursor debonding material and resultant debonding coating material may be utilized. For example, suitable debonding coating material may include, but is not limited to, boron nitride, e.g., crystalline h-BN; and combinations thereof. Next, at a step 140 of FIG. 3, a precursor oxidation resistant material may be deposited onto the first debonding layer to form a first oxidation resistant layer. Any suitable precursor oxidation resistant material and resultant oxidation resistant coating material may be utilized. For example, suitable oxidation resistant coating material may include, but is not limited to, aluminum nitride, and combinations thereof. Next, at a step 150 of FIG. 3, steps 130 and 140 may be repeated in succession until the exemplary IFC multilayer achieves a desired thickness and overall composition.

Throughout the process set forth above and illustrated in FIG. 3, the operating parameters of the CVD reactor may be adjusted for each material being deposited. For example, when the initial layer of, e.g., boron nitride, is deposited, the operating parameters of the CVD reactor may be attuned to the conditions necessary to deposit boron nitride, e.g., crystalline h-BN. However, when the next layer, e.g., aluminum nitride, is deposited, the operating parameters of the CVD reactor may be adjusted and attuned to the conditions necessary to deposit aluminum nitride. Such adjustments may be made throughout the process to fabricate the exemplary IFC multilayer.

With such knowledge in mind, in at least one embodiment, the process may operate at a suitable temperature range of approximately 600°C to approximately 1,400°C. For example, when depositing a resultant debonding coating material, a CVD reactor may be operated at a temperature range of approximately 1,200°C to approximately 1,400°C and, more particularly, approximately 1,250°C to approximately 1,350°C. In another example, when depositing the resultant oxidation resistant coating material, a CVD reactor may be operated at a temperature range of approximately 700°C to approximately 1,000°C. In at least one embodiment, the process may utilize various precursor materials for depositing the aforementioned crystalline h-BN and AlN layers. Suitable precursor materials may include, but are not limited to, boron halides, e.g., BF₃; BCl₃; NH₃; AlCl₃; individually, and combinations thereof. For example, in a CVD reactor, ammonia and an aluminum precursor vaporous material may be produced *in-situ* via a reaction of aluminum metal and a halogen reagent. During operation of the exemplary method, the aforementioned precursor materials may be delivered into the CVD reactor using a carrier gas. Suitable carrier gases may include, but are not limited to, hydrogen, argon, nitrogen, and combinations thereof.

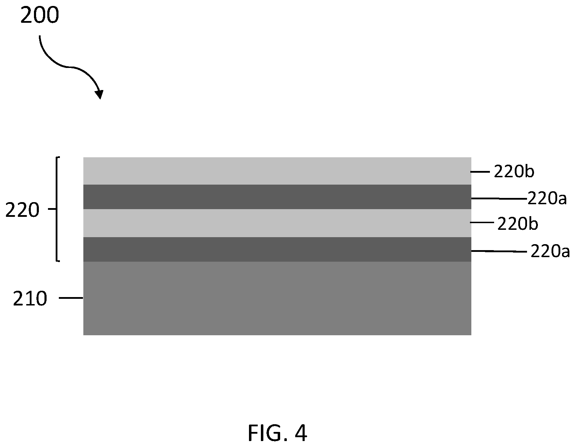

Referring now to FIG. 4, an exemplary coated substrate 200 is illustrated. The exemplary coated substrate 200 may have a substrate 210, e.g., a ceramic-containing material such as fiber(s), fiber tow(s), or both. Each substrate 210 may exhibit and possess an IFC multilayer 220 deposited thereon. The IFC multilayer 220 may comprise alternating layers of a debonding coating material(s) 220a and an oxidation resistant coating material(s) 220b. As discussed above, the debonding layer(s) 220a may comprise boron nitride, e.g., crystalline h-BN; and, the oxidation resistant layer(s) 220b may comprise, e.g., aluminum nitride. In at least one embodiment, the IFC multilayer 220 may comprise a thickness of approximately 50 nm to approximately 2,000 nm. In at least one other embodiment, the debonding layer(s) 220a may comprise a thickness of approximately 10 nm to approximately 160 nm, and, more particularly, approximately 50 nm to approximately 100 nm. In yet at least one other embodiment, the oxidation resistant layer(s) 220b may comprise a thickness of approximately 25 nm to approximately 400 nm, and, more particularly, approximately 110 nm to approximately 220 nm. When comparing the oxidation resistant layer thickness to the debonding layer thickness, the AlN:BN ratio may be approximately 1.5:1 to approximately 3:1; and, more particularly, approximately 2:1 to approximately 2.5:1; and, even more particularly, approximately 2.2:1 (this ratio may be an atomic ratio). As mentioned above, the aforementioned IFC multilayer may comprise alternating layers that may form a set of alternating layers. Depending on the thickness(es) of the individual layers and total thickness of the IFC multilayer, the exemplary IFC multilayer may comprise the following formula: (BN-AlN)x, where x ≥ 2 sets of layers; and, more particularly, 2-10 sets of layers; and, even more particularly, 2-4 sets of layers.

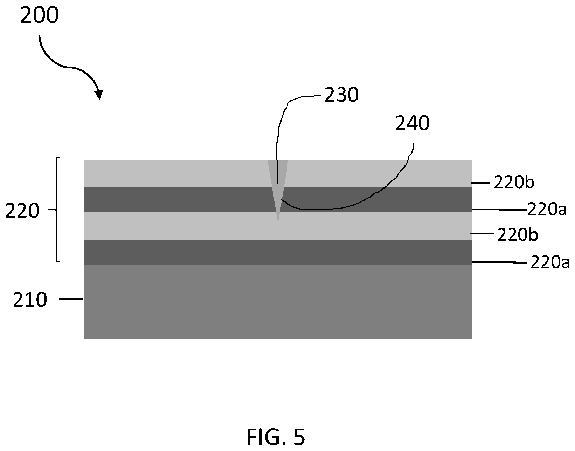

During operation, the IFC multilayer may be exposed to water vapor (H₂O), moisture (H₂O), air (O₂), and elevated temperatures, e.g., at least approximately 425°C, as mentioned above. As the outermost debonding and oxidation resistant layers 220a, 220b are exposed to H₂O and/or O₂, a crack may occur as well as a tailored *in-situ* reaction too (see FIG. 1). For example, BN and AlN in the presence of H₂O and/or O₂ at the aforementioned elevated temperatures may produce an aluminum borate glass reaction product 230 (see FIG. 5). Such aluminum borate glass reaction products may include, but are not limited to, Al₁₈B₄O₃₃, and combinations thereof. When a crack 240 forms due to exposure and resultant oxidative degradation (see FIG. 5), the aluminum borate glass reaction product 230 also may be produced and plug the crack 240 (see FIG. 5). The aluminum borate glass reaction product 230 may prevent further ingress of oxidants and, in turn, halt oxidative degradation of the IFC multilayer 220.

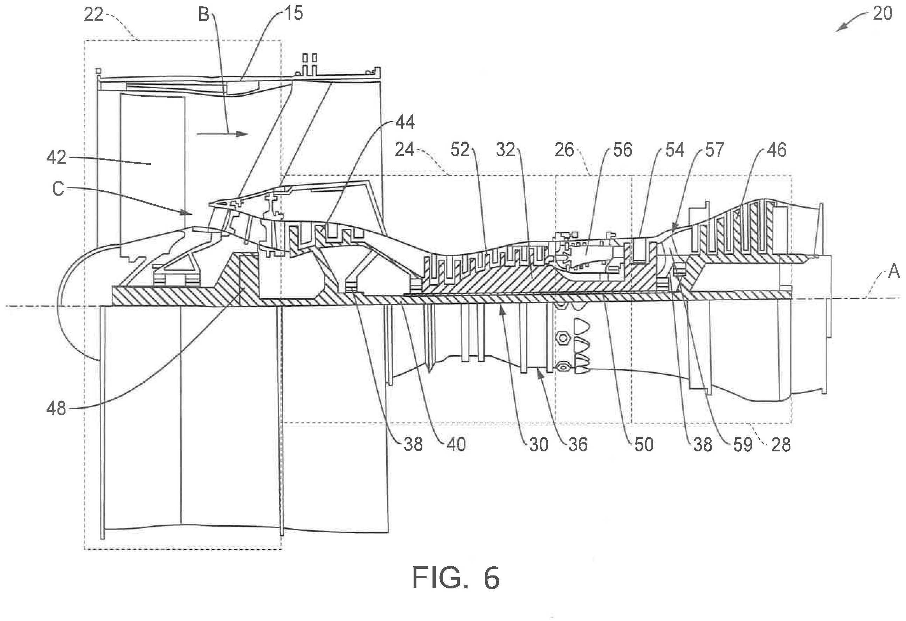

Referring now to FIG. 6, a gas turbine engine 20 is schematically illustrated. The gas turbine engine 20 (i.e., a two-spool turbofan) includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 4 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

Any one or more of the aforementioned gas turbine engine components of the gas turbine engine 20 may contain ceramic matrix composites (CMCs) containing the exemplary coated ceramic-containing material disclosed herein. The aforementioned gas turbine components may include, but are not limited to, rotors, blades, blade outer air seal(s); individually, and combinations thereof. In operating conditions exhibiting elevated temperatures, moisture and water vapor concentrations, the boron nitride of the exemplary IFC multilayer can quickly oxidize. This oxidation reaction can enhance the oxidation rate of aluminum nitride present within the structure and begin forming a plug to seal the crack(s). The resultant reaction product can be an aluminum borate glass that exhibits a composition of approximately Al₁₈B₄O₃₃ and serves as the plug that seals the crack(s).

While functioning as an IFC layer, the exemplary IFC multilayer can allow for fiber debonding through the debonding layer. The IFC multilayer can also form a self-healing refractory aluminum borate glass, e.g., including Al₁₈B₄O₃₃, The aforementioned aluminum borate glass can be stable up to approximately 1,900°C. Conversely, BN IFC alone can be unstable in the presence of moisture and volatilize at much lower temperatures, that is, below approximately 1,900°C. In turn, the self-healing aluminum borate glass can plug the crack and prevent further ingress of oxidation into the remaining IFC multilayer and underlying reinforced fiber(s). As a result, the exemplary IFC multilayer can offer improved CMC durability.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A coated substrate (200), comprising:
a substrate (210) comprising a ceramic material;
an interfacial coating multilayer (220) disposed on the substrate (210), the interfacial coating multilayer (220) comprising at least one set of alternating layers comprising at least one each of the following layers:
a first debonding layer (220a) disposed adjacent the substrate (210); and
a first oxidation resistant layer (220b) disposed adjacent the first debonding layer (220a) and opposite the substrate (210).

2. The coated substrate (200) of claim 1, further comprising:
a second debonding layer (220a) disposed adjacent the first oxidation resistant layer (220b) and opposite the first debonding layer (220a); and
a second oxidation resistant layer (220b) disposed adjacent the second debonding layer (220a) and opposite the first oxidation resistant layer(220b).

3. The coated substrate (200) of claim 2, wherein:
the first and second debonding layers (220a) comprise boron nitride; and/or
the first and second oxidation resistant layers (220b) comprise aluminum nitride.

4. The coated substrate (200) of any preceding claim, wherein the interfacial coating multilayer (220) comprises a thickness of approximately 50 nm to approximately 2,000 nm.

5. The coated substrate (200) of any preceding claim, wherein the first debonding layer (220a) comprises a thickness of approximately 10 nm to approximately 160 nm.

6. The coated substrate (200) of any preceding claim, wherein the first oxidation resistant (220b) layer comprises a thickness of approximately 25 nm to approximately 400 nm.

7. The coated substrate (200) of any preceding claim, wherein the first debonding layer (220a) and the first oxidation resistant layer (220b) comprise a thickness ratio of approximately 1.5:1 to approximately 3:1.

8. The coated substrate (200) of any preceding claim, wherein the interfacial coating multilayer (220) comprises a formula of (BN-AlN)x, wherein x ≥ 2 and comprises at least two sets of the alternating layers.

9. A method of fabricating an interfacial coating multilayer, comprising the steps (130) of:
loading a substrate (210) into an apparatus;
depositing a precursor debonding material onto the substrate (210) to form a first debonding layer (220a);
depositing a precursor oxidation resistant material onto the first debonding layer (220a) to form a first oxidation resistant layer (220b); and
repeating the deposition steps until forming an interfacial coating multilayer (220) comprising at least one set of alternating layers comprising at least one of the following layers:
the first debonding (220a) layer disposed adjacent the substrate (210); and
the first oxidation resistant layer (220b) disposed adjacent the first debonding (220a) layer and opposite the substrate (210).

10. The method of claim 9, wherein depositing comprises any one or more of the following techniques: chemical vapor deposition, chemical vapor infiltration, and combinations thereof.

11. The method of claim 9 or 10, wherein depositing comprises depositing at a temperature range of approximately 600°C to approximately 1,400°C, wherein, optionally:
depositing the precursor debonding material further comprises depositing at a temperature range of approximately 1,200°C to approximately 1,400°C; and/or
depositing the precursor oxidation resistant material further comprises depositing at a temperature range of approximately 700°C to approximately 1,000°C.

12. The method of claim 9, 10 or 11, wherein the precursor debonding material and the precursor oxidation resistant material comprise any one or more of the following: boron halides, ammonia, aluminum trichloride, and combinations thereof.

13. A method for sealing a crack (240), comprising the steps of:
exposing at least one gas turbine engine component to any one or more of the following: water vapor, moisture, air, elevated temperature, and combinations thereof;
forming at least one crack (240) in a matrix within a ceramic matrix composite of the at least one gas turbine engine component, the at least one crack (240) propagating into an interfacial coating multilayer (220) deposited on a substrate (210) of the ceramic matrix composite and debonding within at least one debonding layer (220a) of the interfacial coating multilayer;
producing a reaction product caused by a reaction between the interfacial coating multilayer (220) having the at least one crack (240) with any one or more of the following: water vapor, moisture, air, elevated temperature, and combinations thereof; and
sealing the at least one crack (240) with the reaction product,
wherein the interfacial coating multilayer (220) comprises at least one set of alternating layers comprising at least one of the following layers:
at least one debonding layer (220a) disposed adjacent the ceramic matrix composite;
at least one oxidation resistant layer (220b) disposed adjacent the at least one debonding layer and opposite the ceramic matrix composite; and
optionally, at least one additional debonding layer (220a) followed by at least one additional oxidation resistant layer (220b) disposed on the at least one oxidation resistant layer (220a).

14. The method of claim 13, wherein:
the first debonding layer (220a) comprises boron nitride and the first oxidation resistant layer (220b) comprises aluminum nitride; and/or
the reaction product comprises aluminum borate glass and/or Al₁₈B₄O₃₃.

15. The method of claim 13 or 14, wherein producing the reaction product comprises a reaction of BN and AlN in the presence of H₂O and O₂ to produce an aluminum borate glass.
